# EUROPEAN PATENT APPLICATION

(11) **EP 2 749 843 A1**
(43) Date of publication of application: **02.07.2014**
(21) Application number: 12199755.5
(22) Date of filing: 28.12.2012
(51) Int. Cl.: G01C 21/20, G01C 21/36, H04W 4/02

(54) **Method for filtering and selecting geographical points of interest and mobile unit corresponding thereto**

(71) Applicant: GN Store Nord A/S, 2750 Ballerup (DK)
(72) Inventor: Jensen, Jakob, 2650 Hvidovre (DK); Urup, Kathrine Steen, 2500 Valby (DK); Johansen, Lars Klint, 2500 Valby (DK)
(74) Representative: Zacco Denmark A/S

(57) **Abstract**

This invention relates to a method of and a mobile unit to providing audible information about at least one geographical point of interest using a mobile unit; the method comprising at least one iteration of steps of:
- establishing an observation using a geographic observation unit; the establishing comprising establishing a geographic point of observation using a geographic positioning unit and establishing a direction of observation using a geographic orientation unit;
- providing uncertainty data associated with the point of observation and/or the direction of observation;
- establishing a geographic field of observation that is bounded and extending from the geographic point of observation as a function of the uncertainty data and the direction of observation;
- providing a list of records of geographic points of interest as a function of the geographic field of observation, which list of records of geographic points of interest has at least one geographic point of interest record
- creating a filtered list of points of interest by excluding geographic points of interest that only have a certain percentage of their physical extent within the geographic field of observation; and
- providing audible point of interest information associated with points of interest in the filtered list of point of interest.

## Description

### Field of invention

This invention relates to a method of and a mobile unit to providing audible information about at least one geographical point of interest using a mobile unit.

### Background of the invention

Obtaining information about points of interest and objects in a field is an established technological area and the practitioner will make use of a variety of hardware to determine a current location or position and orientation and will know how use such data to look-up information about the area geo-databases with witch the user's equipment is communicating with.

However the data or information retrieved by the equipment or methods may not always be adequate, as expected or appropriate.

An objective of this invention is to provide a method for improving the usefulness of raw geographical data retrieved.

In particular this invention seeks to remedy effects of inaccuracy of the location or position data and/or the viewing angle of a user with a mobile unit.

The inaccuracy may inevitable vary over time depending on the environment an open square in urban environment, street with high buildings, magnetic disturbance, etc. A further objective is to provide a robust method and system to handle such inaccuracies.

### Summary

An objective is achieved by a method of providing audible information about at least one geographical point of interest using a mobile unit; the method comprising at least one iteration of:
- establishing an observation using a geographic observation unit; the establishing comprising establishing a geographic point of observation using a geographic positioning unit and establishing a direction of observation using a geographic orientation unit;
- providing uncertainty data associated with the point of observation and/or the direction of observation;
- establishing a geographic field of observation that is bounded and extending from the geographic point of observation as a function of the uncertainty data and the direction of observation;
- providing a list of records of geographic points of interest as a function of the geographic field of observation, which list of records of geographic points of interest has at least one geographic point of interest record
- creating a filtered list of points of interest by excluding geographic points of interest that only has a certain percentage within the geographic field of observation; and
- providing audible point of interest information associated with included points of interest from the filtered list of points of interest.

Thus this method will provide a list of points of interests that is more usable to the user that by not filtering.

A person skilled in the art will appreciate the existence of geographic databases, services and available implementations that will return a point of interest or multiple points of interests and associated information or data records as a function of a geographic input.

This by forming the geographic input according to this invention a more effective usage of such services is provided that furthermore results in more relevant data and information.

In particular according to an aspect of the invention the retrieved data is relevant according to uncertainty in the methods and systems of determining location, position, or orientation or in the landscape of data stored about a certain area.

In particular filtering according to this invention is advantageous when the dealing with audio information that in many instances will have to be played sequentially and thus must be provided in a more effective or relevant fashion than say visual data or information.

In an alternative embodiment the step of creating a filtered list of points of interest may be performed by excluding geographic points of interest that partially overlap of the adjusted geographic field of observation.

A geographic point may be expanded by spatially expanding from a point to a curve, an area, or a volume. The expansion may be performed by some predetermined percentage or by using empirical suitable factors. In one embodiment the expansion may be performed dynamically and thus vary the numbers and sizes of points of interest to a reasonable number as judged by the user.

Thus a point of interest may be an area. I.e. not just say the centre of a building, but rather the boundaries of a building.

The step of estimating an observation uncertainty cell associated with the geographic field of observation may be obtained as a function of data from global navigation satellite system inaccuracy data delivered by or derived from a global navigation satellite system, when using a global navigation satellite system to provide the geographic point of observation.

Thus providing readily and timely information about a current location in a way based on readily available inaccuracy data being broadcasted without the need to either pre- or post-processing.

In one or more embodiments, the step of establishing a geographic field of observation may be performed by establishing a field of observation that extends in a predetermined viewing distance with a width essentially double the value of the uncertainty data.

This provides a particularly simple implementation that reflects most users' standard way of perceiving an area.

In one or more embodiments, the method further comprising a step of estimating an observation uncertainty cell associated with the provided uncertainty data and creating an adjusted geographic field of observation by adding the observation uncertainty cell to the field of observation.

This provides a way to include potentially interesting points of interest and keep those points of interest alive as a user moves about or signals change since the observation uncertainty cell can be adjusted and takes such increases or changes in inaccuracies into account.

In one or more embodiments, the step of creating an adjusted geographic field of observation comprises adding the observation uncertainty cell to the geographic field of observation at the geographic point of observation.

Besides being a simple way of ensuring inclusion of nearby points of interests, it will also ensure the inclusion of points of interest that may behind the user or in the opposite direction of the direction of observation.

In one or more embodiments of the invention, the method entails a step of estimating an observation uncertainty cell as a function of the received uncertainty data results in a circular or spherical observation uncertainty cell and the step of adding the circular or spherical observation uncertainty cell to the geographical field of observation at the geographic point of observation is at the centre of the circular or spherical observation uncertainty cell.

This provides a very simple and perceived relevant way of including and maintaining close by points of interests and it further includes a way of including or not disregarding points of interests that are actually in front of the user, but registered to be behind the user due to inaccurate data.

In one or more embodiments of the invention, the step of estimating an observation uncertainty cell as a function of the received uncertainty data results in an uncertainty cell that extends the outer boundary of the geographic field of observation by the value of the uncertainty data and the step of adding the observation uncertainty cell to the field of observation at the outer boundary of the field of observation in the direction of observation.

The step of estimating a point of interest uncertainty cell associated with the geographical point of interest may also be obtained as a function of a point of interest inaccuracy data delivered by or derived from a geographical point of interest record; preferably from a database, and associated to a geographic point of interest.

In one or more embodiments of the invention, the step of estimating an observation uncertainty cell as a function of uncertainty data results in a cone-shaped observation uncertainty cell extending from the geographic point of observation and the step of adding the observation uncertainty cell to the field of observation to extend from the geographic point of observation adjacent to the sides of the field of observation.

The cone-shape may be a V-shape, wing-shape or a fan-shape as deemed appropriate. A person skilled in the art will appreciate different and equivalent shapes that will reflect an angular uncertainty or inaccuracy.

Hence the area of observation will be formed to take into account errors in the direction of orientation and be adjusted accordingly or intelligently and maintain a geographical point of view in sight.

In one or more embodiments of the invention, the step of providing uncertainty data associated with the point of observation and/or the direction of observation is obtained as a function of direction of observation inaccuracy derived by or derived from a geographic orientation unit to provide the direction of observation.

In an alternative implementation of estimating an observation uncertainty cell associated with the geographic field of observation this may be obtained as a function of direction of observation inaccuracy that may be derived by or derived from a geographic observation unit when using a geographic observation unit to provide the direction of observation.

In one or more embodiments of the invention, the step of providing uncertainty data associated with the point of observation and/or the direction of observation is obtained as a function of yaw inaccuracy as an angle velocity difference between readings from a magnetometer and a gyroscope when using a magnetometer and a gyroscope to estimate yaw of a mobile device; preferably worn as intended by a user and most preferably head worn as intended to estimate a head yaw to determine a viewing direction of a user.

In one or more embodiments of the invention, the step of creating a filtered list of points of interest is performed by further excluding geographic points of interest, sets of points of interest or extended points of interests that are not omnivisible from the point of observation.

By omnivisible is understood objects that are all visible from the point of observation.

Hence this can indicate a visible facade or front of a building, and if the building is not omnivisible, this will filter away buildings when a user is located behind say a line parallel to the facade.

In one or more embodiments of the invention, creating a filtered list of points of interest is not performed when the size of a point of interest, the coverage of sets of points of interest or extended points of interest is smaller than the size of an uncertainty cell and at least partially overlaps the uncertainty cell.

By coverage is understood an area that closely embeds a series of points such as points in a grid forming a structure.

This will maintain small i.e. small points of interests relative to the uncertainty cell in the list of points of interest thereby maintaining a stable list even in the event that inaccuracy changes or increases and thus reducing or eliminating "jitter" of points of interest.

In one or more embodiments of the invention, the step of creating a filtered list of points of interest is performed by further excluding geographic points of interest, sets of points of interest or extended points of interests that are in or have a certain percentage in a shadow of an obstacle.

It is appreciated that the method may further comprise steps of creating a filtered list of points of interests by further filtering the list of points of interests to include geographic points of interests or expanded geographic points of interests when the observation uncertainly cell at least partially overlaps with a expanded point of interest and the direction of observation does not intersect with the expanded point of interest.

It may also be implemented that creating a filtered list of points of interests is by further filtering the list of points of interests to exclude geographic points of interests or expanded geographic points of interests when the observation uncertainly cell at least partially overlaps with a expanded point of interest and the direction of observation intersect with the expanded point of interest.

In one or more embodiments of the invention, the method further comprises estimating an observation uncertainty cell associated with a point of observation or an extended point of observation and creating an adjusted geographic field of observation by subtracting the observation uncertainty cell from the field of observation.

Thereby allowing for eliminating areas of observations to be included in the request for points of interests when the uncertainty or inaccuracy is deemed too high or passing a threshold value. This will eliminate the inclusion of information or data about points of interest from an area that is undetermined. This may be when uncertainty or inaccuracy starts to cover multiple points of interests.

Finally steps of sorting the filtered list of points of interest and point of interest information associated with points of interest may be performed. This can be performed by sequentially selecting from the sorted list of point of interest.

A person skilled in the art will appreciate the existence and use of audio equipment that is generally available for storing, transferring, translating, processing, recording and playing back either text, numbers, audio-clips or alike to actually prepare a audible information to be transmitted to be heard.

An objective of the invention is achieved by a mobile unit configured to provide audible information about a geographical point of interest selected from a filtered list of points of interests, the mobile unit comprising
- an orientation unit configured for estimating a current orientation of a user when the user handles the orientation unit as intended;
- a geographical position unit configured to estimate a geographical point of observation of the mobile unit
- a communications unit configured to receive information about a point of interest, point of interest information, point of interest uncertainty cell, a geographic point of interest record and/or any other information related to a particular point of interest.
- a computational unit configured to perform a method of providing audible information as disclosed.

In one or more embodiments of the invention, a selector configured to sort a filtered list of points of interest and for a user to interactively select information about a point of interest to be provided as audible information.

### Brief Description of Drawings

Embodiments of the invention will be described in the figures, whereon:
Fig. 1A and B illustrate a user at a point of observation observing in an observation direction along a line of sight and in a field of observation;
Fig. 2 shows a series of steps to provide audible information about points of interest in a field of observation;
Fig. 3 shows a series of steps to provide audible information about points of interests in a field of observation that is adjusted;
Fig. 4 illustrates a user observing in a field of observation;
Fig. 5 illustrates a field of observation with points of interests or expanded points of interest of different shapes;
Fig. 6 illustrates a field of observation adjusted to include various observation uncertainty cells;
Fig. 7 illustrates multiple variants of excluding or including observation uncertainty cells, points of observations uncertainty cells, or shadows when adjusting the field of observation
Fig. 8 illustrates a rule of exception when the point of interest is small and behind the user and the direction of observation, to not exclude such small point of interest.
Fig. 9 illustrates a rule of excluding a point of interest when it is not all visible or omnivisible;
Fig. 10 shows mobile unit implemented as a hearing device with an inertial orientation unit,
Fig. 11 illustrates a schematic of a mobile unit and
Fig. 12 illustrates an environment with databases/archives with which a mobile unit interacts with.

### Detailed Description

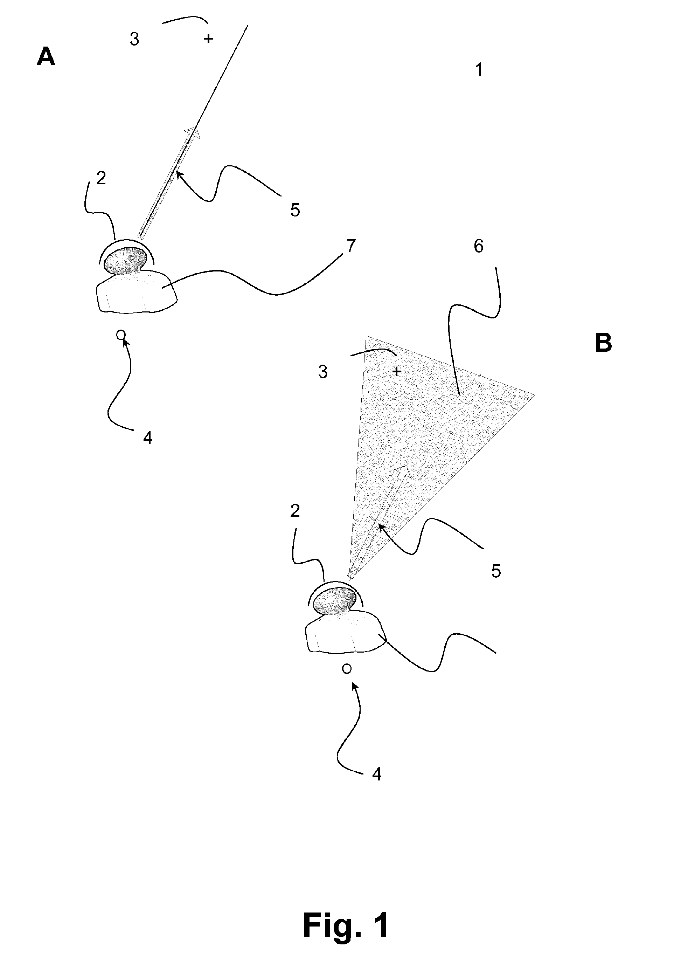

Fig. 1A and B illustrates one setup of using a method of providing audible information 1using a mobile unit 2 that probes a geographic point of interest 3 observed from a geographic point of observation 4 in a geographic direction of observation 5 and generates a geographic field of observation 6.

The mobile unit 2 may be configured to be worn by a user 7; and in particular configured to be head worn.

Fig. 1A illustrates a line of sight view along the direction of observation 5, which line of sight may be unbounded.

Fig. 1B illustrates a field of observation 6 that is bounded. The boundaries in this case are the side boundaries essentially following a field of view of the user and an outer boundary that limits the field of view in the direction of observation 5.

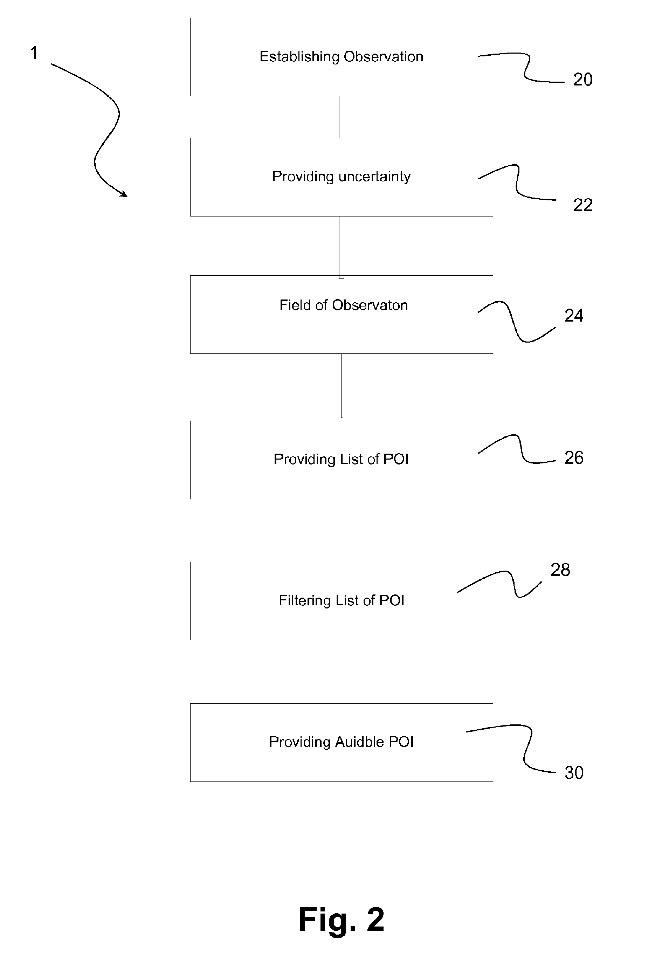

Fig. 2 shows a series of steps as a method of providing audible information 1 about points of interest 3 in a field of observation 5.

The method 1 may comprise a step of establishing an observation 20, a step of providing uncertainty data 22, a step of establishing a geographic field of observation 24, a step of providing a list of record of geographic points of interests 26, a step of creating a filtered list of points of interest 28, and a step of providing an audible point of interest information 30.

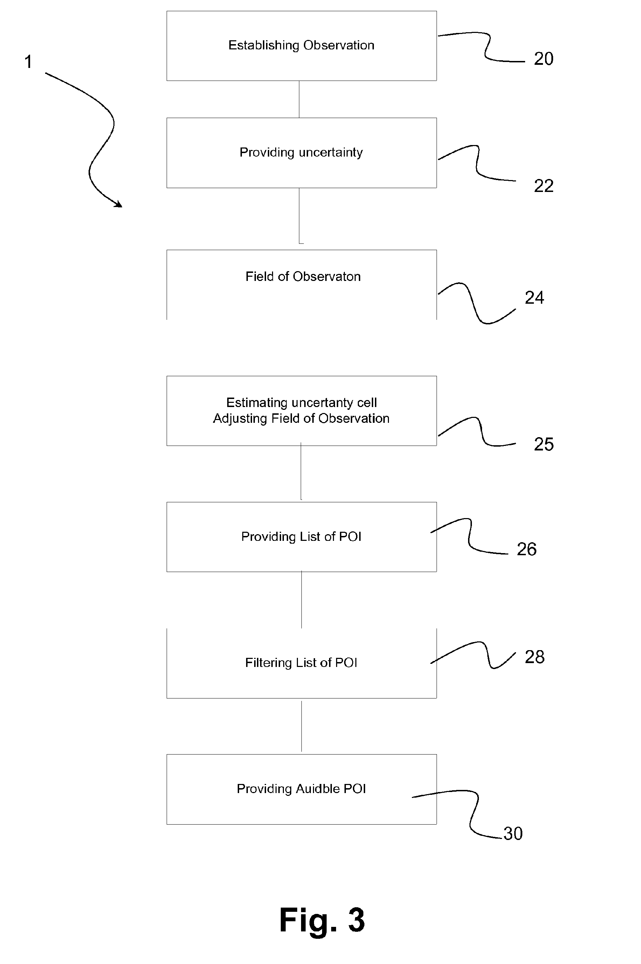

Fig. 3 shows in continuation of fig. 2 a series of steps as a method of providing audible information 1 about points of interest 3 in a field of observation 5 and a further step of adjusting the field of observation 25.

The method 1 may comprise a step of establishing an observation 20, a step of providing uncertainty data 22, a step of establishing a geographic field of observation 24, a step of adjusting the field of observation 25, a step of providing a list of record of geographic points of interests 26, a step of creating a filtered list of points of interest 28, and a step of providing an audible point of interest information 30.

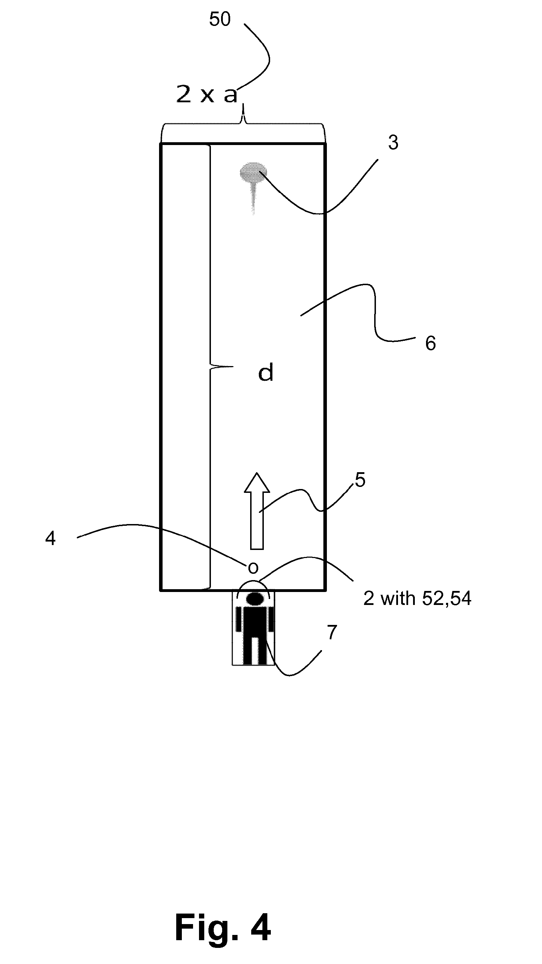

Fig. 4 illustrates a user 7 observing a field of observation 6 that is bounded by a distance d in the direction of observation 5 from a point of observation 4 and by an uncertainty 50, a, to each side.

The viewing or observation distance d may be present, predetermined, fixed, variable or dynamical. The uncertainty 50 may be provided along with the geographic position 4 from a geographic positioning unit 52 or it may be derived from the geographic position 4 data or as a function of multiple data. The uncertainty data 50 is here related to the point of observation 4.

Likewise the direction of observation 5 may be provided by an orientation unit 54 or as derived from data from the orientation unit 54.

In either case the uncertainty 50 data may be used to generate an observation uncertainty cell 56 that is an area or volume that is an estimate of the uncertainty related to an observation.

The field of observation 6 is in this embodiment a rectangle, but it may be square or any other free form shape. In principle the field of observation 6 may be a volume and a simple equivalent to the rectangle would be a tube with a radius a and a length d.

A suitable length d is about 100-150 m.

In one embodiment the field of observation 6 may be adjusted to create an adjusted field of observation 58. One such adjustment may be when the uncertainty 50 varies thus varying the width of the field of observation 6. This may happen when the signal strength available to the geographic position unit 52 varies.

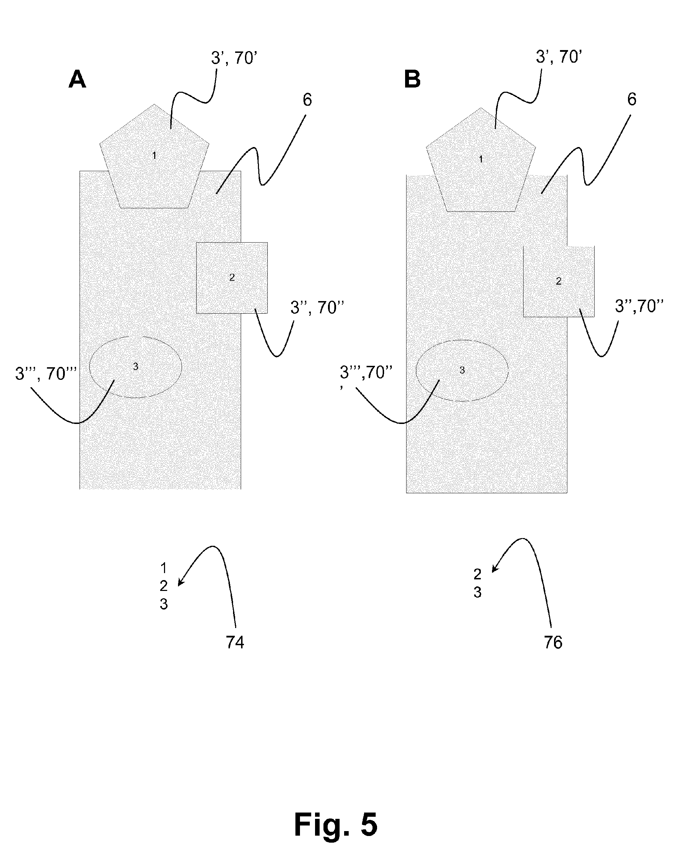

Fig. 5 illustrates a field of observation 6 and several points of interests 3', 3", 3"'. In this case the points of interests are spatially extended and each covers an area and is an expanded point of interest 70. In general a point of interest 3 may be expanded in this manner. In either case a point of interest 3 or an expanded point of interest 70 may have a point of interest information 72 associated to it, which point of interest information 72 has some audible content. Such point of interest information 72 may be stored on a remote computer or in a local storage.

Fig. 5A illustrates how points of interest 3', 3", 3"', 70', 70", 70"' overlap with a field of observation 6 and generates a list of records of geographic points of interest 74 or a list of POI.

However not all points of interest 3', 3", 3"', 70', 70", 70"' will have a large enough overlap with the field of observation 6 to be interesting enough.

Fig. 5B illustrates how a filtered list of points of interest 76 is generated by excluding geographic points of interest 3', 70' that only has a certain percentage within the geographic field of observation 6. Only the content of the filtered list 76 is selected to be provided either directly as audible content or as texts or numbers that will be transformed to audible content through interpretation.

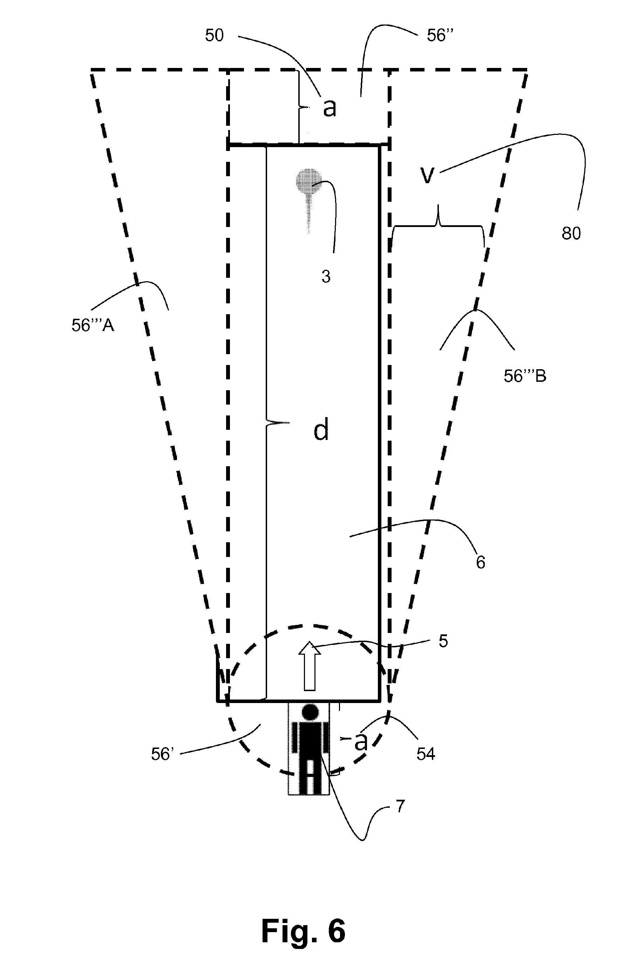

Fig. 6 illustrates a field of observation 6 that is adjusted by adding observation uncertainty cell(s) 56 to the field of observation 6.

In continuation of fig. 4 there is a field of observation 6 extending in a distance d in the direction of observation 5 from a user 7 and with a width twice an uncertainty 50.

The field of observation 6 is expanded by adding observation uncertainty cells 56.

For example a circular uncertainty cell 56' with a radius a is generated around the point of observation and added to the field of observation 6. This will include the field of

In this embodiment the field of observation 6 is further expanded by extending the field of observation by an uncertainty cell 56" at the outer end of the observation field 6. This uncertainty cell 56" has the same width 2xa as the field of observation 6 and extends about a distance a.

The step of estimating an observation uncertainty cell 56 may also depend on the inaccuracy or uncertainty of determining the direction of observation 5.

In this embodiment a further uncertainty cell 56 is determined as a function of uncertainty data 50 that results in a cone-shaped observation uncertainty cell 56"' extending from the geographic point of observation 4 as a wing that that is attached or added to the field of observation 6 or the adjusted field of observation 58.

In a particular embodiment, the step of providing uncertainty data 50 associated with the direction of observation 5 is obtained by an observation unit 54 configured to estimate yaw and thus yaw inaccuracy 80.

The yaw inaccuracy 80 may be obtained as an angle velocity difference between a magnetometer 82 and a gyroscope 84 when using a magnetometer 82 and a gyroscope 84 to estimate yawn 80 of a mobile device 2.

In a particular embodiment the mobile unit 2 may be head worn in an intended way by a user 7 and thus configured to estimate a head yaw to determine a viewing direction i.e. the direction of observation 5 of a user 7.

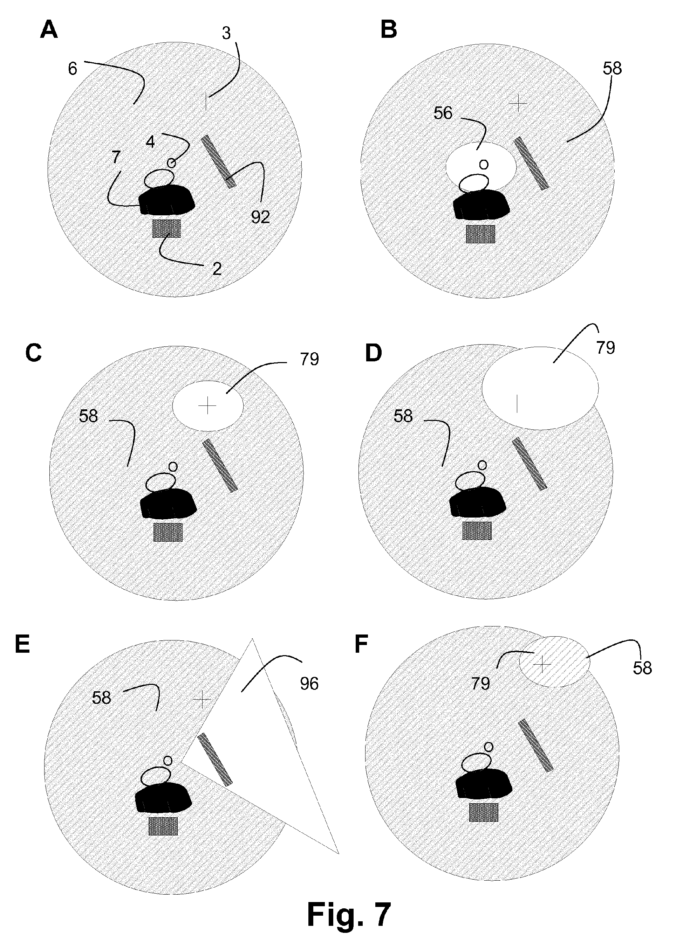

Fig. 7 illustrates multiple fields of observations 6 and adjustments of fields of observations 25.

All figures have a user 7 at a point of observation 4 observing by use of a mobile unit 2 in a field of observation 6. Within the field of observation 6 there is a point of interest 3 and an obstacle 92. Those elements are shown in fig. 7A.

It is understood that the field of observation 6 or an adjusted field of observation 58 essentially has the same format or can be converted into a standard format by an operation of merging or deleting areas or volumes. Such field or resulting field of observation 6 may be communicated to a geographical service computer that will return the points of interest, object and associated records to such points of interest.

Thus a geographical service, being a remote or local computer, a web-service or a networked set of computers or databases will return a list of points of interest and associated information records as a function of a geographical field of interest 6. Thus according to an aspect of embodiments adding or subtracting or generally changing or morphing an area or volume as a field of interest will alter the field of interest to allow for more useful returns of points of interests.

Fig. 7B further illustrates an embodiment where the point of observation 4 is associated with an observation uncertainty cell 56. In this embodiment the field of observation 6 is adjusted to exclude the observation uncertainty cell 56 thus resulting in an adjusted field of observation 58.

Fig. 7C further illustrates an embodiment where the point of interest 3 is associated with a point of interest uncertainty cell 79. In this embodiment the field of observation 6 is adjusted to exclude the point of interest uncertainty cell 79 thus resulting in an adjusted field of observation 58.

In particular the point of interest uncertainty cell 79 is all embedded within the field of observation 6.

Fig. 7D further illustrates an embodiment where the point of interest 3 is associated with point of interest uncertainty cell 79 that is not all embedded in the field of observation 6. Also in this case the point of interest uncertainty cell 79 is excluded from the field of observation 6 as this is adjusted. Such decision of exclusion or inclusion may be based on how large a percentage of the point of interest uncertainty cell 79 that overlap with the field of observation 6.

Fig. 7E further illustrates an embodiment where there is an obstacle 92 in the field of observation 6 covers an area or creates a shadow 96 for the user 7 at the point of observation 4. In this embodiment the shadow 96 is excluded from the field of observation 6.

The obstacle 96 may be an obstacle like a wall or it may be a point of interest 3 or an extended point of interest 70 like a building or a monument that simply shadows and thus essentially is an obstacle.

Fig. 7F further illustrates a situation where the point of interest uncertainty cell 79 is so small and has an overlapping area with the field of observation 6 and thus the point of interest uncertainty cell 79 is added to the field of interest 6 to form an adjusted field of observation 58.

Although attention has been on subtracting an uncertainty area 56, 79 or a shadow area 96 from the field of observation 6 to form an adjusted field of observation 58, then operations of adding an uncertainty area 56, 79 or a shadow area 86 may also be implemented.

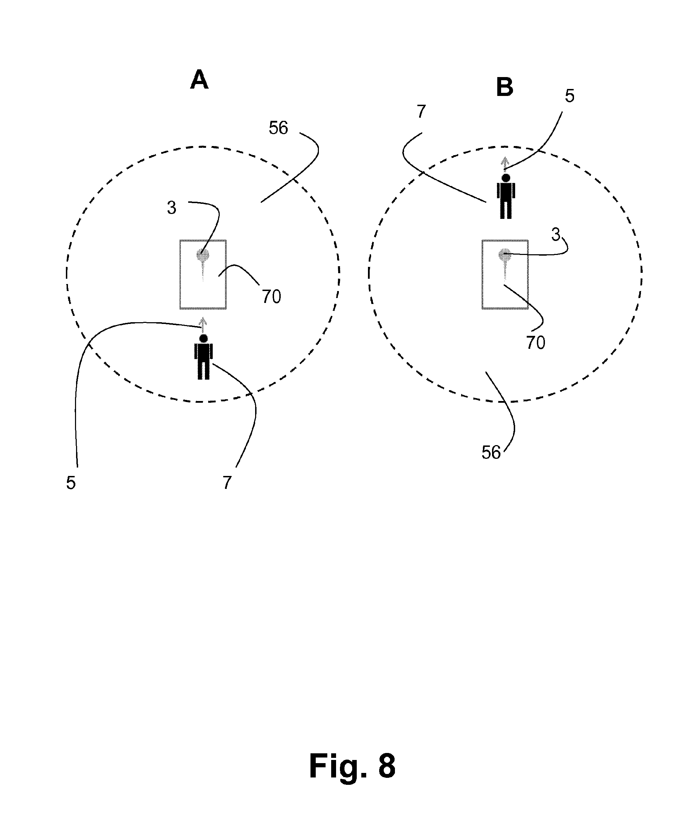

Fig. 8 illustrates a situation where the point of interest 3 has an extension as an expanded point of interest 70 that is so small (and in this case embedded in) relative to the observation uncertainty cell 56 that it not excluded from the field of interest even though the user 7 has a direction of observation 5 that is away from the point of interest 3.

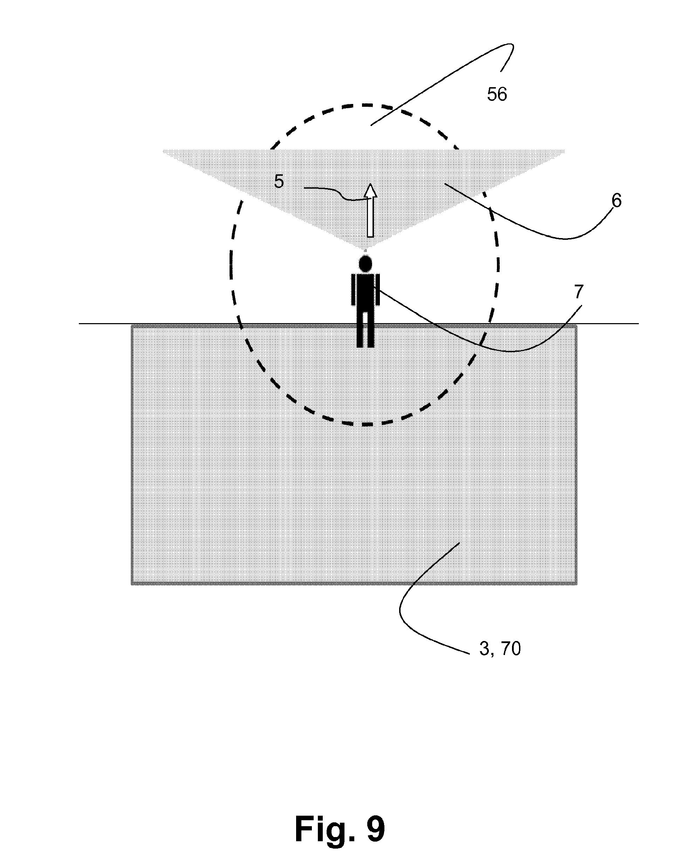

Fig. 9 Illustrates a situation where a user 7 with or without an area of point of observation uncertainty cell 56 is so close to a building or a point of interest 3 or an extended point of interest 70 that this point of interest 3 or extended point of interest 70 is not all visible or not omni-visible. In that case the point of interest 3 or the extended point of interest 70 will not be included in or filtered away from a filtered list 28.

This may be determined by extending a line parallel to the front or facade of a point of interest 3 i.e. a building, and determine if the user 7 in the direction of observation 5 is located behind or in front of the line. In the shown embodiment the user 7 is in front of the line, and the building or point of interest 3 is included as a point of interest 3 in the filtered list of points of interest 28.

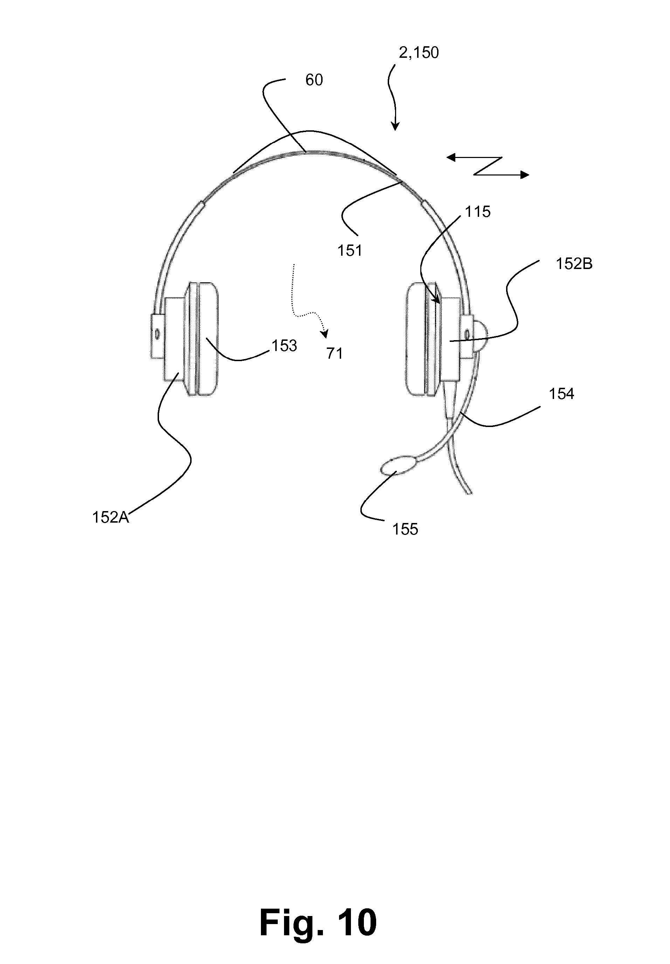

Fig. 10 shows an exemplary headset 150 of the mobile unit 2, having a headband 151 carrying two earphones 152A, 152B similar to a conventional corded headset with two earphones interconnected by a headband.

Each earphone 152A, 152B of the illustrated headset 150 comprises an ear pad 153 for enhancing the user comfort and blocking out ambient sounds during listening or two-way communication.

A microphone boom 154 with a voice microphone 155 at the free end extends from an earphone 152B. The ear pad 153 is used for picking up the user's voice e.g. during two-way communication via a mobile phone network and/or for reception of user commands to the mobile unit 2.

The mobile unit 2 presented as a headset 150 has a communications system for communication with external devices. This may be a Bluetooth link or alike. A Bluetooth transceiver in the earphone may be wirelessly connected by a Bluetooth link to a Bluetooth transceiver a hand-held device (not shown).

A similar headset 150 may be provided without the microphone boom, whereby the microphone is provided in a housing on the cord as is well-known from prior art headsets.

An inertial measurement unit or orientation unit 54 is accommodated in a housing mounted on or integrated with the headband 151 and interconnected with components in the earphone housing through wires running internally in the headband 151 between the orientation unit 54 and the earphones 152A, 152B.

The user interface of the headset 150 is not shown, but may include one or more push buttons, and/or one or more dials as is well-known from conventional headsets.

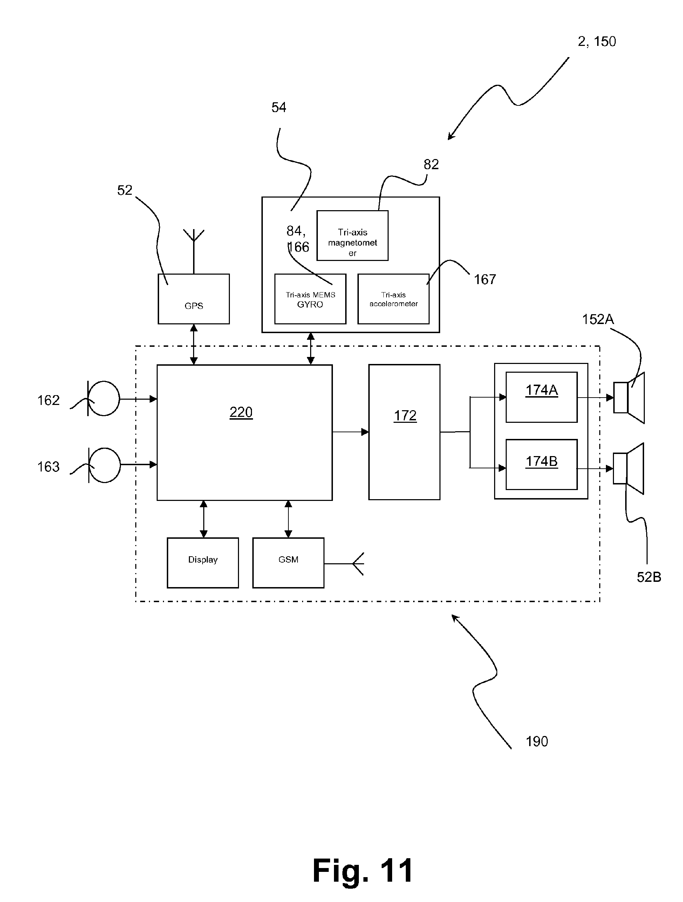

Fig. 11 shows a block diagram of a mobile unit 2 comprising a headset 150 and a hand-held device 190.

The various components of the system may be distributed otherwise between the headset 150 and the hand-held device 190. For example, the hand-held device 190 may accommodate the GPS-receiver 65.

Another system may not have a hand-held device 190 so that all the components of the system are accommodated in the headset 150. The system without a hand-held device 190 does not have a display, and speech synthesis is used to issue messages and instructions to the user and speech recognition is used to receive spoken commands from the user.

The illustrated mobile unit 2 comprises a headset 150 comprising electronic components including two loudspeakers 152A, 152B for emission of sound towards the ears of the user 71 (not shown), when the headset 150 is worn by the user 71 in its intended operational position on the user's 71 head.

It should be noted that in addition, the headset 150 may be of any known type including an Ear-Hook, In-Ear, On-Ear, Over-the-Ear, Behind-the-Neck, Helmet, Headguard, etc, headset, headphone, earphone, ear defenders, earmuffs, etc.

The illustrated headset 150 has a voice microphone 162 e.g. accommodated in an earphone housing or provided at the free end of a microphone boom mounted to an earphone housing.

The headset 150 further has one or two ambient microphones 163, e.g. at each ear, for picking up ambient sounds.

The headset 150 has an orientation unit 54 positioned for determining head yaw, head pitch, and/or head roll, when the user wears the headset 150 in its intended operational position on the user's head.

The illustrated orientation unit 54 has tri-axis MEMS gyros 166 that provide information on head yaw, head pitch, and head roll in addition to tri-axis accelerometers 167 that provide information on three dimensional displacement of the headset 150.

The headset 150 also has a location unit or a geographical position system unit, which in this case is a GPS-unit 52 for determining the geographical position of the user, when the user wears the headset 150 in its intended operational position on the head, based on satellite signals in the well-known way. Hereby, the user's point of observation 4 and direction of orientation 5 may be provided to the user based on data from the headset 150.

Optionally, the headset 150 accommodates a GPS-antenna configured for reception of GPS-signals, whereby reception of GPS-signals is improved in particular in urban areas where, presently, reception of GPS-signals may be difficult.

In a headset 150 without the GPS-unit 52, the headset 150 has an interface for connection of the GPS-antenna with an external GPS-unit, e.g. a hand-held GPS-unit, whereby reception of GPS-signals by the hand-held GPS-unit is improved in particular in urban areas where, presently, reception of GPS-signals by hand-held GPS-units may be difficult.

The illustrated orientation unit 54 also has a magnetic compass in the form of a tri-axis magnetometer facilitating determination of head yaw with relation to the magnetic field of the earth, e.g. with relation to Magnetic North.

The hand-held device 190 of the mobile unit 2 has a computational unit 220 or a separate processor unit with input/output ports connected to the sensors of the orientation unit 52, and configured for determining and outputting values for head yaw, head pitch, and head roll, when the user wears the headset 150 in its intended operational position on the user's head.

The computational unit 220 may further have inputs connected to accelerometers of the orientation unit 54, and configured for determining and outputting values for displacement in one, two or three dimensions of the user when the user wears the headset 150 in its intended operational position on the user's head, for example to be used for dead reckoning in the event that GPS-signals are lost.

Thus, the illustrated mobile unit 2 is equipped with a complete attitude heading reference system (AHRS) for determination of the orientation of the user's head that has MEMS gyroscopes, accelerometers and magnetometers on all three axes. The computational unit provides digital values of the head yaw, head pitch, and head roll based on the sensor data.

The headset 150 has a data interface for transmission of data from the orientation unit 54 to the computational unit 220 of the hand-held device 114,116, e.g. a smart phone with corresponding data interface. The data interface may be a Bluetooth Low Energy interface.

The headset 150 further has a conventional wired audio interface for audio signals from the voice microphone162, and for audio signals to the loudspeakers 152A, 152B for interconnection with the hand-held device 114,116 with corresponding audio interface.

This combination of a low power wireless interface for data communication and a wired interface for audio signals provides a superior combination of high quality sound reproduction and low power consumption of the mobile unit 2.

The headset 150 has a user interface (not shown), e.g. with push buttons and dials as is well-known from conventional headsets, for user control and adjustment of the headset 150 and possibly the hand-held device 190 interconnected for selection of media to be played.

The hand-held device 190 receives head yaw from the orientation unit 54 of the hearing device 10 through the wireless interface 16. With this information, the hand-held device 150 may display maps on its display in accordance with orientation of the head of the user as projected onto a horizontal plane, i.e. typically corresponding to the plane of the map. For example, the map may automatically be displayed with the position of the user at a central position of the display, and the current head x-axis pointing upwards.

The user may use the user interface of the hand-held device 190 to input information on a geographical position the user desires to visit in a way well-known from prior art hand-held GPS-units.

The hand-held device 190 may display maps with a suggested route to the desired geographical destination as a supplement to the aural guidance provided through the headset 150.

The hand-held device 190 may further transmit spoken guiding instructions to the headset 150 through the audio interfaces is well-known in the art, supplementing the other audio signals provided to the headset 150.

In addition, the microphone of headset 150 may be used for reception of spoken commands by the user, and the computational unit 220 may be configured for speech recognition, i.e. decoding of the spoken commands, and for controlling the mobile unit 2 to perform actions defined by respective spoken commands.

The hand-held device 190 filters the output of a sound generator 172 of the hand-held device 54 with a pair of filters 174A, 174B with an HRTF into two output audio signals, one for the left ear and one for the right ear, corresponding to the filtering of the HRTF of a direction in which the user should travel in order to visit a desired geographical destination.

This filtering process causes sound reproduced by the headset 150 to be perceived by the user as coming from a sound source localized outside the head from a direction corresponding to the HRTF in question, i.e. from a virtual sonar beacon located at the desired geographical destination.

In this way, the user is relieved from the task of watching a map in order to follow a suitable route towards the desired geographical destination.

The user is also relieved from listening to spoken commands intending to guide the user along a suitable route towards the desired geographical destination.

Further, the user is free to explore the surroundings and for example walk along certain streets as desired, e.g. act on impulse, while listening to sound perceived to come from the direction toward the desired geographical destination (also) to be visited, whereby the user is not restricted to follow a specific route determined by the mobile unit 2.

The sound generator 172 may output audio signals representing any type of sound suitable for this purpose, such as speech, e.g. from an audio book, radio, etc, music, tone sequences, etc.

The user may for example decide to listen to a radio station while walking, and the sound generator 172 generates audio signals reproducing the signals originating from the desired radio station filtered by pair of filters 174A, 174B with the HRTFs in question, so that the user perceives to hear the desired music from the direction towards the desired geographical destination to be visited at some point in time.

At some point in time, the user may decide to follow a certain route determined and suggested by the mobile unit 2, and in this case the processor controls the HRTF filters so that the audio signals from the sound generator or loudspeaker are filtered by HRTFs corresponding to desired directions along streets or other paths along the determined route. Changes in indicated directions will be experienced at junctions and may be indicated by increased loudness or pitch of the sound. Also in this case, the user is relieved from having to visually consult a map in order to be able to follow the determined route.

The mobile unit 20 may be operated without using the visual display, i.e. without the user consulting displayed maps, rather the user specifies desired geographical destinations with spoken commands and receives aural guidance by sound emitted by the headset 150 in such a way that the sound is perceived by the user as coming from the direction towards the desired geographical destination.

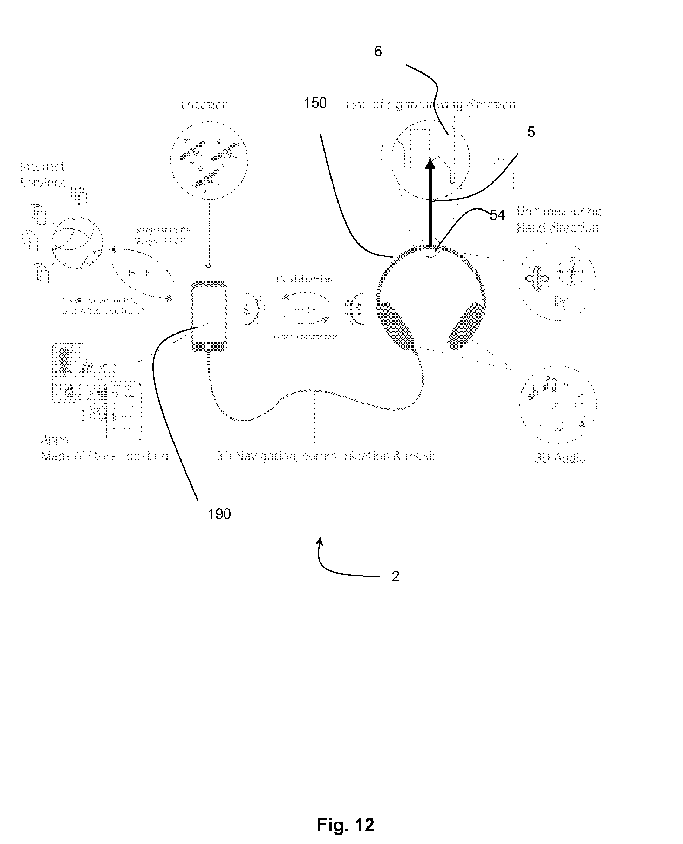

Fig. 12 illustrates a configuration and operation of an example of the mobile unit 2 shown in Fig. 11, with the headset 150 together with a hand-held device 190, which in the illustrated example is a smart phone, with a personal navigation app containing instructions for the processor or computational unit of the smart phone to perform the operations of the computational unit 220 of the mobile unit 2 and of the pair of filters 74A, 74B, with an HRTF. The headset 150 is connected to the smart phone 190 with a chord providing a wired audio interface between the two units 190, 150 for transmission of speech and music from the smart phone to the hearing device, and speech from the voice microphone (not shown) to the smart phone as is well-known in the art.

As indicated in Fig. 11 by the various exemplary GPS-images displayed on the smart phone display, the personal navigation app is executed by the smart phone in addition to other tasks that the user selects to be performed simultaneously by the smart phone 190, such as playing music, and performing telephone calls when required.

The personal navigation app configures the smart phone190 for data communication with the headset 150 through a Bluetooth Low Energy wireless interface available in the smart phone 190 and the headset 150, e.g. for reception of head yaw from the orientation unit 54 of the headset 150. In this way, the personal navigation app may control display of maps on the display of the smart phone in accordance with orientation of the head of the user as projected onto a horizontal plane, i.e. typically corresponding to the plane of the map. For example, the map may be displayed with the position of the user at a central position of the display, and the head x-axis pointing upwards.

During navigation, the mobile unit 2 operates to position a virtual sonar beacon at a desired geographical location, whereby a guiding sound signal is transmitted to the ears of the user that is perceived by the user to arrive from a certain direction in which the user should travel in order to visit the desired geographical location. The guiding sound is generated by a sound generator of the smart phone 190, and the output of the sound generator 72 is filtered in parallel with the pair of filters 74A, 74B of the smart phone 190 having an HRTF so that an audio signal for the left ear and an audio signal for the right ear are generated. The filter functions of the two filters approximate the HRTF corresponding to the direction from the user to the desired geographical location taking the yaw of the head of the user into account.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

At any time during use of the mobile unit, the user may use the user interface to request a spoken presentation of a an address with an address record located along the line of interest which in this case is the field of view or line of sight of the user, e.g. by pushing a specific button located at the mobile unit 2.

### List of references

- Method of providing audible information: 1
- Mobile unit: 2
- Geographic Point of Interest: 3
- Geographic Point of Observation: 4
- Geographic Direction of observation: 5
- Geographic field of Observation: 6
- User: 7
- Establishing observation: 20
- Providing uncertainty: 22
- Establishing Field of Observation: 24
- Adjusting Field of Observation: 25
- Providing List of POI: 26
- Filtering List of POI: 28
- Providing Audible POI: 30
- Uncertainty data: 50
- Geographic observation unit: 51
- Geographic positioning unit: 52
- Geographic orientation unit: 54
- Observation uncertainty cell: 56
- Adjusted geographic field of observation: 58
- Expanded point of interest: 70
- Point of Interest Information: 72
- List of records of geographic:
- points of interests/ List: 74
- Geographic point of interest record: 76
- Filtered list of points of interests: 78
- point of interest uncertainty cell: 79
- Direction of observation inaccuracy: 80
- Magnetometer: 82
- Gyroscope: 84
- Point of Interest inaccuracy: 90
- Obstacles: 92
- List of Obstacles: 94
- Shadow: 96
- GNSS (global navigation:
- satellite system) inaccuracy: 30
- GNSS (global navigation satellite system) system: 32
- Headset: 150
- Headband: 151
- Loudspeakers: 152
- Ear pad: 153
- microphone boom: 154
- Microphone: 155
- Voice microphone: 162
- Ambient microphones: 163
- Tri-axis MEMS gyros: 166
- Accelerometers: 167
- Sound generator: 172
- Filters: 174
- Hand held device: 190
- Computational unit: 220

## Claims

1. Method of providing audible information (1) about at least one geographical point of interest (3) using a mobile unit (2); the method comprising at least one iteration of steps of:
- establishing an observation (20) using a geographic observation unit (51); the establishing comprising establishing a geographic point of observation (4) using a geographic positioning unit (52) and establishing a direction of observation (4) using a geographic orientation unit (54);
- providing (22) uncertainty data (50) associated with the point of observation (4) and/or the direction of observation (5)
- establishing (24) a geographic field of observation (6) that is bounded and extending from the geographic point of observation (4) as a function of the uncertainty data (50) and the direction of observation (5);
- providing a list of records of geographic points of interest (26) as a function of the geographic field of observation (6), which list of records of geographic points of interest (26) has at least one geographic point of interest record (76)
- creating a filtered list of points of interest (28) by excluding geographic points of interest (3) that only has a certain percentage within the geographic field of observation (6); and
- providing audible point of interest information (30) associated with included points of interest (3) from the filtered list of points of interest (28).

2. Method of providing audible information (1) according to claim 1, the step of establishing a geographic field of observation (24) is performed by establishing a field of observation (6) that extends in a predetermined viewing distance with a width essentially double the value of the uncertainty data (50).

3. Method of providing audible information (1) according to claim 1, the method further comprising a step (25) of:
- estimating an observation uncertainty cell (56) associated with the provided uncertainty data (50) and
- creating an adjusted geographic field of observation (25) by adding the observation uncertainty cell (56) to the field of observation (6).

4. Method of providing audible information (1) according to claim 3, the step of creating an adjusted geographic field of observation (25) comprises
- adding the observation uncertainty cell (56) to the geographic field of observation (6) at the geographic point of observation (4).

5. Method of providing audible information (1) according to claim 4,
- the step of estimating an observation uncertainty cell (56) as a function of the received uncertainty data (50) results in a circular or spherical observation uncertainty cell (56) and
- the step of adding the circular or spherical observation uncertainty cell (56) to the geographical field of observation (6) at the geographic point of observation (4) is at the centre of the circular or spherical observation uncertainty cell (56).

6. Method of providing audible information (1) according to any of claims 4-5, the step of estimating an observation uncertainty cell (25) as a function of the received uncertainty data (50) results in an uncertainty cell (56) that extends the outer boundary of the geographic field of observation (6) by the value of the uncertainty data (50) and
- the step of adding the observation uncertainty cell (56) to the field of observation (6) at the outer boundary of the field of observation (6) in the direction of observation (5).

7. Method of providing audible information (1) according to any of claims 4-6
- the step of estimating an observation uncertainty cell (56) as a function of uncertainty data (50) results in a cone-shaped observation uncertainty cell (56) extending from the geographic point of observation (4) and
- the step of adding the observation uncertainty cell (56) to the field of observation (6) to extend from the geographic point of observation (4) adjacent to the sides of the field of observation (6)

8. Method of providing audible information (1) according to any of claims 4-7
- the step of providing uncertainty data (22) associated with the point of observation (4) and/or the direction of observation (5) is obtained as a function of direction of observation inaccuracy (80) derived by or derived from a geographic orientation unit (54) to provide the direction of observation (5)

9. Method of providing audible information (1) according to any of claims 4-8
- the step of providing uncertainty data (22) associated with the point of observation (4) and/or the direction of observation (5) is obtained as a function of
- yaw inaccuracy (80) as an angle velocity difference between readings from a magnetometer (82) and a gyroscope (84) when using a magnetometer (82) and a gyroscope (84) to estimate yaw of a mobile device (2); preferably worn as intended by a user (7) and most preferably head worn as intended to estimate a head yaw to determine a viewing direction of a user (7).

10. Method of providing audible information (1) according to any of claims 1-9 where
- the step of creating a filtered list of points of interest (28) is performed by further excluding geographic points of interest (3), sets of points of interest (3',3", 3"',...) or extended points of interests (70) that are not omnivisible from the point of observation (4).

11. Method of providing audible information (1) according to claim 10 where the step of creating a filtered list of points of interest (28) is not performed when the size of a point of interest (3), the coverage of sets of points of interest (3',3", 3"',...) or extended points of interest (70) is smaller than the size of a uncertainty cell (56) and point of interest (3) at least partially overlaps the uncertainty cell (56).

12. Method of providing audible information (1) according to any of claims 1-11 where the step of creating a filtered list of points of interest (28) is performed by further excluding geographic points of interest (3), sets of points of interest (3',3", 3"',...) or extended points of interests (70) that are in or have a certain percentage in a shadow (96) of an obstacle (92).

13. Method of providing audible information (1) according to any of claims 1-12 further comprising a step of:
- estimating an observation uncertainty cell (56) associated with a point of observation (3) or an extended point of observation (70) and
- creating an adjusted geographic field of observation (9) by subtracting the observation uncertainty cell (56) from the field of observation (6).

14. Mobile unit (2) configured to provide audible information about a geographical point of interest (3) selected from a filtered list of points of interests (78), the mobile unit comprising
- an orientation unit (54) configured for estimating a current orientation of a user (7) when the user (7) handles the orientation unit (54) as intended;
- a geographical position unit (52) configured to estimate a geographical point of observation (4) of the mobile unit (2)
- a communications unit configured to receive information about a point of interest (3), point of interest information (72), point of interest uncertainty cell (56), a geographic point of interest record (76) and/or any other information related to a particular point of interest (3).
- a computational unit configured to perform a method of providing audible information (1) according to any of claim 1 to claim 13.

15. Mobile unit (2) according to claim 14, further configured with
- a selector configured to sort a filtered list of points of interest (74) and for a user to interactively select information about a point of interest (3) to be provided as audible information.
